# EUROPEAN PATENT SPECIFICATION

(11) **EP 2 932 781 B1**
(45) Date of publication and mention of the grant of the patent: **09.08.2017**
(21) Application number: 12808788.9
(22) Date of filing: 14.12.2012
(51) Int. Cl.: H04W 76/00

(54) **METHOD FOR IMPROVING SUCCESS RATE OF REACHING EMERGENCY CALLER**
VERFAHREN ZUR ERHÖHUNG DER ERFOLGSRATE DER ERREICHBARKEIT VON NOTRUFEN
PROCÉDÉ PERMETTANT D'AMÉLIORER LE TAUX DE RÉUSSITE D'ATTEINTE D'UN APPELANT D'URGENCE

(43) Date of publication of application: 21.10.2015
(73) Proprietor: Huawei Technologies Co., Ltd., Longgang District Shenzhen, Guangdong 518129 (CN)
(72) Inventor: MOPIDEVI, Rama Kumar, S-224 79 Lund (SE); HOKFELT, Johan, S-225 91 Lund (SE)
(74) Representative: Maiwald Patentanwalts GmbH
(86) International application number: PCT/EP2012/075629
(87) International publication number: WO 2014/090338

(56) References cited:
- US-A- 5 689 548
- US-A1- 2009 122 793
- US-A1- 2012 142 308

## Description

### Technical FIELD

Implementations described herein relate generally to a communication device and a method in a communication device. In particular is herein described a mechanism for making an emergency call in a communication device comprising at least two subscriber identities.

### BACKGROUND

A communication device, also known as User Equipment, UE, mobile station, wireless terminal, receiver and/or mobile terminal is enabled to communicate wirelessly in a wireless communication system, sometimes also referred to as a cellular radio system. The communication may be made e.g. between two communication devices, between a communication device and a wire connected telephone and/or between a communication device and a server via a Radio Access Network, RAN, and possibly one or more core networks.

The communication device may further be referred to as mobile telephone, cellular telephone, computer tablet or laptop with wireless capability. The communication devices in the present context may be, for example, portable, pocket-storable, hand-held, computer-comprised, or vehicle-mounted mobile devices, enabled to communicate voice and/or data, via the radio access network, with another entity, such as another communication device or a server.

The wireless communication system covers a geographical area which is divided into cell areas, with each cell area being served by a radio network node, or base station e.g. a Radio Base Station, RBS, which in some networks may be referred to as transmitter, "eNB", "eNodeB", "NodeB" or "B node", depending on the technology and terminology used. The radio network nodes may be of different classes such as e.g. macro eNodeB, home eNodeB or pico base station, based on transmission power and thereby also cell size. A cell is the geographical area where radio coverage is provided by the radio network node/ base station at a base station site. One radio network node, situated on the base station site, may serve one or several cells. The radio network nodes communicate over the air interface operating on radio frequencies with the communication devices within range of the respective radio network node.

In some radio access networks, several radio network nodes may be connected, e.g. by landlines or microwave, to a Radio Network Controller, RNC, e.g. in Universal Mobile Telecommunications System, UMTS. The RNC, also sometimes termed Base Station Controller, BSC, e.g. in GSM, may supervise and coordinate various activities of the plural radio network nodes connected thereto. GSM is an abbreviation for Global System for Mobile Communications (originally: Groupe Special Mobile).

In 3rd Generation Partnership Project, 3GPP Long Term Evolution, LTE, radio network nodes, which may be referred to as eNodeBs or eNBs, may be connected to a gateway e.g. a radio access gateway, to one or more core networks.

In the present context, the expressions downlink, downstream link or forward link may be used for the transmission path from the radio network node to the communication device. The expression uplink, upstream link or reverse link may be used for the transmission path in the opposite direction i.e. from the communication device to the radio network node.

Wireless Fidelity, Wi-Fi, which also may be spelled Wifi, WiFi or WIFI, is a popular technology that allows the communication device to exchange data wirelessly over a computer network, including high-speed Internet connections. The Wi-Fi Alliance defines Wi-Fi as any "Wireless Local Area Network, WLAN, products that are based on the Institute of Electrical and Electronics Engineers', IEEE, 802.11 standards.

A communication device that is configured to use Wi-Fi may comprise e.g. a personal computer, video game console, smartphone, tablet, or digital audio player. The communication device in the present context may be, for example, portable, pocket-storable, hand-held, computer-comprised, or vehicle-mounted mobile devices, enabled to communicate voice and/or data, via the radio access network, with another entity, such as another device, a radio network node or a server. The communication device may connect to a network resource such as the Internet via a wireless network access point. Such an access point, or hotspot as it also may be referred to, may have a range of about 20 meters (65 feet) indoors and a greater range outdoors. Hotspot coverage may comprise an area as small as a single room with walls that block radio waves or as large as many square miles, which may be achieved by using multiple overlapping access points.

In a Wi-Fi enabled device, the communication device needs to search for networks to be able to connect, in order to perform e.g. a Voice over the Internet Protocol, VoIP, call.

A communication device may sometimes comprise at least two subscriber identities, such as Subscriber Identity Modules, SIMs. Such a communication device may occasionally be referred to as a Multiple SIM phone. Each subscriber identity of such communication device may be associated with a modem that is configured for communication over a certain access technology, such as GSM, UMTS, LTE etc, and/or a Voice over the Internet Protocol, VoIP, such as Skype or Google voice.

However, one or more of the subscriber identities may be considered primary subscriber identity and the rest of the subscriber identities are considered secondary subscriber identities.

Generally the user may select which subscriber identity is primary depending on a cost plan.

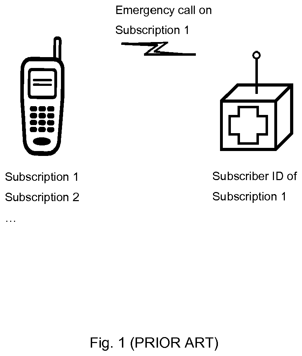

A communication device comprising a plurality of subscription identities according to prior art is schematically illustrated in **Figure 1**. When a telephone call is to be made, the call is placed on the primary subscriber identity, which in the illustrated example is SIM 1, unless e.g. the primary subscriber identity (SIM 1) is out of coverage. In such case, the call is instead placed on a secondary subscriber identity in a predefined prioritization order, usually depending on the cost plan.

In emergency situations, when an emergency call is to be made, there is a risk that the emergency call suffers from unacceptable voice quality or is dropped due to deteriorating signal level, for example.

However, in order for enabling call back, the communication device provides the utilised subscription identity to the Public Service Answering Point, PSAP. Thus the PSAP has information for identifying the calling communication device, comprising e.g. directory number, mobile identity, etc associated with the active first subscription identity, in case the PSAP agent wants to call back the caller. Some few reasons for making such call back may be that the emergency call is dropped, and/or in order to enquire details of the caller/situation to offer further assistance. Further, the PSAP may be requested by any emergency service departments such as Police, Fire Department, etc to provide details of the calling communication device.

In emergency situations, there is a risk that network applies access class restriction to limit the load on the network or the coverage of the network is lost, e.g. when the emergency situation comprises an earth quake, tsunami or similar disaster; or there is congestion in the network, due to many communication attempts simultaneously. In these situations, there is a risk that the caller is not reached in time to provide further assistance.

Further, US 2012/142308 A1 refers to a method for processing an emergency call in a portable terminal regardless of a SIM card activated by a user's selection.

Further, US 2009/122793 A1 refers to a system for establishing an emergency call includes a UE, a P-CSCF and a PSAP. The PSAP can always acquire the IMPU in the TEL URI format and the IMPU in the SIP URI format of the UE, and initiate an emergency callback to the UE according to the IMPU in the SIP URI format.

### SUMMARY

It is therefore an object to obviate at least some of the above mentioned disadvantages and to improve success rate of reaching an emergency caller, within a communication infrastructure.

According to a first aspect, the object is achieved by a method in a communication device, configured for multiple subscriber identities, comprising at least a first subscriber identity and a second subscriber identity, for making an emergency call to a Public Service Answering Point (PSAP), via a network node. The method comprises collecting identity representations of the multiple subscriber identities comprised in the communication device. The identity representations comprise any of: user's directory number, User Equipment Identity, Mobile Subscriber Integrated Services Digital Network Number, dialable phone number, Session Initiation Protocol Uniform Resource Identifier, or a similar distinct identification number and/or denomination. Also, the method comprises receiving a user input value, indicating that an emergency call is desired. Also, in further addition, the method also comprises establishing the emergency call. Further the method in addition also comprises providing the collected identity representations of the multiple subscriber identities to the PSAP for enabling call back on any of the multiple subscriber identities.

According to a second aspect, the object is achieved by a receiver, for making an emergency call to a Public Service Answering Point (PSAP), via a network node. The communication device is configured for multiple subscriber identities, comprising at least a first subscriber identity and a second subscriber identity. The communication device comprises a user interface, configured for receiving a user input value, indicating that an emergency call is desired. Also, the communication device comprises a processing circuit configured for collecting identity representations of the multiple subscriber identities comprised in the communication device. The identity representations comprise any of: user's directory number, User Equipment Identity, Mobile Subscriber Integrated Services Digital Network Number, dialable phone number, Session Initiation Protocol Uniform Resource Identifier, or a similar distinct identification number and/or denomination. Furthermore, the communication device comprises a transmitter, configured for establishing the emergency call and also configured for providing the collected identity representations of the multiple subscriber identities to the PSAP for enabling call back on any of the multiple subscriber identities.

Some advantages according to embodiments herein comprise enhanced possibilities to call back a calling communication device in an emergency situation.

This is achieved by providing a plurality of identification information related to subscriber identities comprised in the communication device. Thereby, when it is not possible to call back on one of the subscriber identities, such as for example the primary subscriber identity, call back may be made on any other of the provided subscriber identities. Thus an improved performance within a wireless communication infrastructure for improving success rate of reaching an emergency caller, is provided.

Other objects, advantages and novel features of the described embodiments of the invention will become apparent from the following detailed description.

### BRIEF DESCRIPTION OF THE DRAWINGS

Embodiments of the invention are described in more detail with reference to attached drawings illustrating examples of embodiments in which:
**Figure 1** is a block diagram illustrating a multi SIM communication device according to prior art.
**Figure 2** is a block diagram illustrating an infrastructure overview wherein the invention is implemented.
**Figure 3** is a block diagram illustrating a communication device according to an embodiment of the invention.
**Figure 4** is a block diagram illustrating a communication device according to an embodiment of the invention.
**Figure 5** is a combined flow chart and signalling diagram, illustrating an embodiment of the invention.
**Figure 6** is a flow chart illustrating a method in a communication device according to an embodiment of the invention.
**Figure 7** is a block diagram illustrating a communication device according to an embodiment of the invention.

### DETAILED DESCRIPTION

Embodiments of the invention described herein are defined as a communication device and a method in a communication device, which may be put into practice in the embodiments described below. These embodiments may, however, be exemplified and realised in many different forms and are not to be considered as limited to the embodiments set forth herein; rather, these embodiments are provided so that this disclosure will be thorough and complete.

Still other objects and features may become apparent from the following detailed description considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

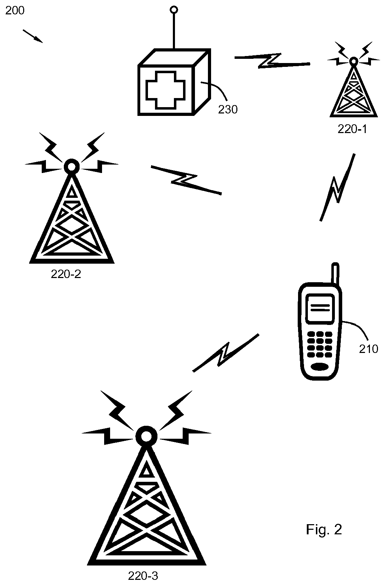

**Figure 2** is a schematic illustration over a wireless communication infrastructure **200**.

The illustration in Figure 2 comprises a communication device **210** and network nodes **220-1, 220-2, 220-3.** The network node 220-1, 220-2, 220-3 may comprise a cellular radio network node or an access point of a wireless local area network. Further, an emergency telephone switchboard **230** is illustrated. The emergency telephone switchboard 230 may also sometimes be referred to as a Public Service Answering Point, PSAP, a telephone operator and/or an emergency service dispatcher.

The wireless communication infrastructure 200 may at least partly comprise a cellular radio network, which in turn may be based on radio access technologies such as e.g. 3GPP LTE, LTE-Advanced, Evolved Universal Terrestrial Radio Access Network, E-UTRAN, Universal Mobile Telecommunications System, UMTS, Global System for Mobile Communications (originally: Groupe Special Mobile) (GSM)/ Enhanced Data rate for GSM Evolution (GSM/EDGE), Wideband Code Division Multiple Access, WCDMA, Worldwide Interoperability for Microwave Access, WiMax, or Ultra Mobile Broadband, UMB, High Speed Packet Access, HSPA Evolved Universal Terrestrial Radio Access, E-UTRA, Universal Terrestrial Radio Access, UTRA, GSM EDGE Radio Access Network, GERAN, 3GPP2 CDMA technologies e.g. CDMA2000 Ix RTT and High Rate Packet Data, HRPD, just to mention some few options.

The cellular radio network may be configured to operate according to the Time Division Duplex, TDD, and/or the Frequency Division Duplex, FDD, principle, according to different embodiments.

TDD is an application of time-division multiplexing to separate uplink and downlink signals in time, possibly with a Guard Period situated in the time domain between the uplink and downlink signalling. FDD means that the transmitter and receiver operate at different carrier frequencies.

The purpose of the illustration in Figure 2 is to provide a simplified, general overview of the methods and nodes, and the functionalities involved. The method and communication device 210 will subsequently, as a non-limiting example, be described in a 3GPP/LTE environment, but the embodiments of the disclosed methods, radio network node and receiver may operate in a wireless communication system based on another access technology such as e.g. any of the above enumerated. Thus, although the embodiments of the invention are described based on, and using the lingo of, 3GPP LTE systems, it is by no means limited to 3GPP LTE.

The wireless local area network, or WLAN, may be a Wi-Fi, as defined by any of IEEE standards 802.11 a, b, g and/or n. The Wi-Fi network is configured to exchange data wirelessly, using radio waves over a computer network, including high-speed Internet connections. It is to be noted that the expressions wireless local area network and/or Wi-Fi may be used somewhat interchangeably with each other within the current context.

The communication device 210 is configured for communication both over the cellular radio communication network via the network node 220-1, 220-2, 220-3 comprising a cellular radio network node, and over the wireless local area network via the network node 220-1, 220-2, 220-3 comprising an access point. Further, the communication device 210 may comprise, or be represented by, a UE, a wireless communication terminal, a mobile cellular phone, a Personal Digital Assistant, PDA, a wireless platform, a mobile station, a portable communication device, a laptop, a computer, a wireless terminal acting as a relay, a relay node, a mobile relay, a Customer Premises Equipment, CPE, a Fixed Wireless Access, FWA, nodes, a personal computer, a video game console, a smartphone, a tablet, a digital audio player or any other kind of device configured to communicate wirelessly with the network node 220-1, 220-2, 220-3 comprising the cellular radio network node or the access point, according to different embodiments and different vocabulary.

Further, the network node 220-1, 220-2, 220-3 may comprise a Mobile Switching Centre, MSC/ Mobile Switching Server, MSS, which is a 3G core network element which controls the network switching subsystem elements.

The communication device 210 is configured to establish a telephone call, in particular an emergency telephone call, to be received by the emergency telephone switchboard 230 via the any of the network nodes 220-1, 220-2, 220-3, which may comprise cellular radio network nodes and/or Wi-Fi access points.

The emergency telephone call referred to herein may concern a telephone call for achieving assistance and/or help from police, medically trained personnel, fire department, National Gendarmerie, tourist police, coast guard, support for children, traffic police, counter terrorist unit, missing person report hotline, civil defence, motorist assistance, rescue emergency, accident service, alpine rescue, crisis-hotline, search and rescue at sea, forest fire, emergency social aid, counter-narcotics immediate intervention, Mountain and Cave Rescue, Carabinieri/ Civil Guard/ National Guard, Child-Abuse and Family Violence, Helicopter air-rescue and/or psychological support, here mentioned merely as examples of such emergency telephone numbers.

Even though the expression emergency telephone call is utilised herein, the invention is not confined neither to telephones nor to voice calls. The invention may be exercised by any communication device 210 configured for making any emergency related connection to an emergency telephone switchboard 230. For example, according to some embodiments the invention may be exercised by a communication device 210 comprising a computer tablet, or other similar device sending a Short Message Service, SMS, message, a Multimedia Messaging Service, MMS, a Video Message Service, VMS, an Enhanced Messaging Service, EMS, an e-mail, a video telephony call or similar means of communication.

It is to be noted that the illustrated network setting of one communication device 210, one emergency telephone switchboard 230 and three network nodes 220-1, 220-2, 220-3 in Figure 2 is to be regarded as a non-limiting example of an embodiment only. The wireless communication system may comprise any other number and/or combination of network nodes 220-1, 220-2, 220-3 communication device 210 and/or emergency telephone switchboard 230, although only one instance of a communication device 210, one instance of a switchboard 230 and three network nodes 220-1, 220-2, 220-3, respectively, are illustrated in Figure 2, for clarity reasons. A plurality of communication devices 210, emergency telephone switchboards 230 and/or network nodes 220-1, 220-2, 220-3 may further be involved in some embodiments of the disclosed invention.

Thus whenever "one" or "a/an" communication device 210, emergency telephone switchboard 230 and/or network node 220-1, 220-2, 220-3 is referred to in the present context, a plurality of communication devices 210, emergency telephone switchboards 230 and/or network nodes 220-1, 220-2, 220-3 may be involved, according to some embodiments.

The network node 220-1, 220-2, 220-3, when comprising a cellular radio network node, may according to some embodiments be referred to as e.g. base stations, NodeBs, evolved Node Bs, eNBs, or eNode Bs, base transceiver stations, Access Point Base Stations, base station routers, Radio Base Stations, RBSs, macro base stations, micro base stations, pico base stations, femto base stations, Home eNodeBs, sensors, beacon devices, relay nodes repeaters or any other network nodes configured for communication with the communication device 210 over a wireless interface, depending e.g. of the radio access technology and terminology used. The cellular radio network node controls the radio resource management within a cell, such as e.g. allocating radio resources to the communication device 210 within the cell and ensuring reliable wireless communication between the cellular radio network node and the communication device 210. The cellular radio network node may typically comprise an eNodeB, e.g. in an LTE-related wireless communication system.

The network node 220-1, 220-2, 220-3, when comprising an access point of the wireless local area network, which further may be referred to as a hotspot, may have a range of about 20 meters (65 feet) indoors and a somewhat greater range outdoors according to some embodiments. However, the access point may be based on IEEE standard 802.11b or 802.11g with a stock antenna and may have a range of 32 m (120 ft) indoors and 95 m (300 ft) outdoors. According to some further embodiments the access point may be based on IEEE standard IEEE 802.11n, however, may more than double the enumerated ranges.

Further, the communication device 210 comprises at least two subscriber identities, such as two Subscriber Identity Modules, SIMs, or a multitude of an arbitrary number of subscriber identities/ SIMs. The respective subscriber identities may be configured for a particular radio access technology such as GSM, UMTS and/or LTE, according to some embodiments. However, the respective subscriber identities may be configured for a VoIP subscription in some embodiments.

Thus the communication device 210 with multiple subscriptions in different embodiments may comprise a dual SIM, a triple SIM, a quad SIM, a penta SIM, a hexa SIM, a hepta SIM, an octa SIM, a nona SIM, a deca SIM, or just be referred to as a multi subscription/ multi SIM comprising *n* subscription identities, where *n* is an arbitrary positive integer exceeding one. In some embodiments, the communication device 210 with multiple subscriptions may comprise a single SIM and a VoIP subscription, a dual SIM and a VoIP subscription, a triple SIM and a VoIP subscription, etc. Furthermore, in some alternative embodiments, the communication device 210 with multiple subscriptions may comprise two VoIP subscriptions, three VoIP subscriptions, ..., n VoIP subscriptions, where *n* is an arbitrary positive integer.

The VoIP subscription/s may comprise e.g. Skype, Google Voice/ Google Talk, Gizmo5, Federated VoIP, AOL Instant Messenger, Blink, Bria, Cisco IP Communicator, Ekiga, Empathy, Eyeball Chat, eyeBeam, IBM Sametime, iCall, Jitsi, KPhone, Linphone, MicroSIP, Mirial Softphone, Mumble, Nymgo, oovoo, Phoner, PhonerLite, QuteCom, Revation Communicator, CommunicatorLive, SFLphone, SightSpeed, Spikko, TeamViewer, TeamSpeak, Tokbox, Toktumi Unlimited / Line2 Pro, Tru App, Twinkle, Vbuzzer, Ventrilo, Voice Operator Panel, X-Lite, Yahoo! Messenger, Yate, Zfone, Acrobits Groundwire, Acrobits Softphone, CSipSimple, Jajah Mobile Web, Line2, Sipdroid, Truphone, Vopium, Windows Mobile 6, X-PRO for Pocket PC, or any similar product implementation with similar functionality.

According to some embodiments of the invention, the communication device 210 is configured for establishing an emergency telephone call to the emergency telephone switchboard 230.

The inventive concept comprises conveying information of more than only one subscription identity of the communication device 210, such as a plurality of, or all subscription identities of the communication device 210, to the PSAP 230.

The expression: "convey information of all subscription to PSAP" is to be interpreted such that the information related to more than one subscription identities of the communication device 210 may be provided to the PSAP 230, not necessarily directly, but may be provided to the cellular network, or rather a communication node 220-1, 220-2, 220-3 in the cellular network, who forwards the information to the PSAP 230. According to different embodiments, the information may be conveyed in an emergency call request message. According to some other different embodiments, the information may be conveyed after transmission of an emergency call request message, as will be further explained subsequently.

When the user makes the emergency call, firstly an emergency call request may be sent to the network. When the network receives the request, a few procedures may be executed, involving communication with the communication device 210. Further, resources may be allocated to complete the emergency call set up, according to some embodiments.

Thus the respective identities of each subscriptions comprised in the communication device 210 may be collected. These collected identities may then be comprised e.g. in an emergency call request message, in some embodiments. Thus the collected identities of all /available/ subscriptions on the communication device 210 may be signalled over the communication network structure 200, to be received by the emergency telephone switchboard/PSAP 230, thereby enabling enhanced call back to the communication device 210 on an alternative subscription, when emergency caller is not reached on the subscription on which the emergency call was made.

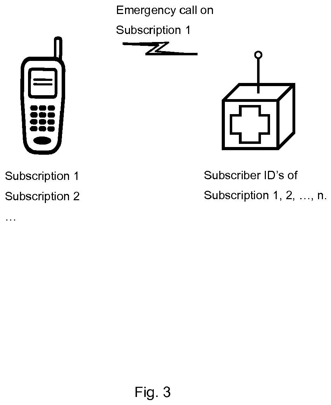

Figure 3 presents an embodiment of the invention wherein a communication device 210 comprising a plurality of subscription identities 1, 2, ..., n where n is an arbitrary positive integer, makes an emergency call to an emergency telephone switchboard 230, providing the emergency telephone switchboard 230 with identification information related to at least two, some, or possibly all subscription identities 1, 2, ..., n comprised on the communication device 210, for enabling call back on any of the alternative subscription identities 1, 2, ..., n.

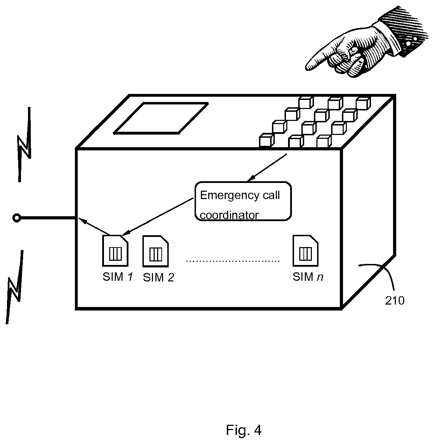

**Figure 4** presents an embodiment of the invention wherein a communication device 210 is making an emergency call.

The user may place an emergency call by dialling the country specific emergency number via a user interface. The country specific emergency number may comprise e.g. 911 in USA/Canada; 112 in (most) European countries; 999 in Great Britain; 000 in Australia; 111 in New Zeeland; 119 in North Korea; 102 in Belarus; 101 in Argentina; 190, 192 or 193 in Brazil, just to mention some arbitrary examples of such emergency numbers.

According to some embodiments, the momentary geographical position of the communication device 210 may be determined, and thereafter, the valid emergency number or emergency numbers in the determined momentary geographical position may be acquired from a list, which may be comprised in a memory within the communication device 210, and/or an external data base, according to some alternative embodiments.

Further, the emergency call establishment may be indicated to an Emergency Call Coordinator, according to some alternative embodiments. The Emergency Call Coordinator may collect identification information of all subscriptions and includes them in emergency call request message. It then requests one of the available subscription identities/SIMs/modems, for example subscription identity 1/SIM 1, to initiate the emergency call.

Each of the multiple subscriber identities may be associated with a respective modem, utilise the same modem, or share parts of the same modem according to different implementations.

The selected modem may then initiate the emergency call establishment procedure. All available identification information of all subscriptions on the communication device 210 may then be signalled to the emergency telephone switchboard 230 during the establishment procedure, according to some embodiments.

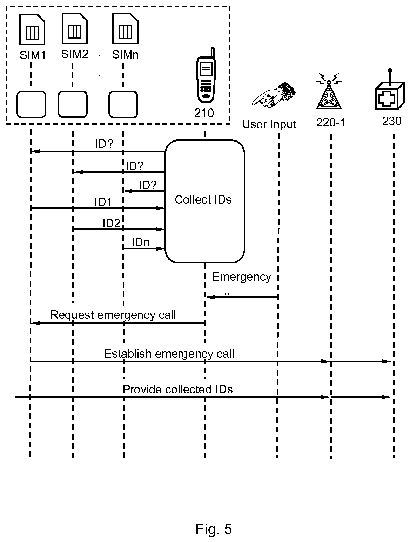

**Figure 5** is a combined flow chart and signalling diagram, illustrating an embodiment of the invention. In Figure 5, the interactions between the user, the communication device 210, the network node 220-1 and the emergency telephone switchboard 230 is indicated.

The illustrated communication device 210 comprises a first SIM, a second SIM, ..., an *n* SIM, where *n* is an arbitrary positive integer exceeding one, which however is merely an illustrative example. The communication device 210 may be a dual SIM phone or a multi SIM phone, according to different embodiments, comprising up to n subscription identities, or SIMs, where n is an arbitrary positive integer exceeding one.

Each of the first SIM and the second SIM may be associated with the first modem and the second modem respectively. The respective identity information, comprising e.g. phone number of these SIMs may be collected and stored at some appropriate point in time, for example before any emergency call is made, or after the detection of a user input indicating an emergency call according to different embodiments.

Thus, when a user input value is detected, indicating that an emergency call is desired, the emergency call may be established on any modem/ subscription identity on the communication device 210 and the collected identity information of the subscriptions on the communication device 210 may be provided to the emergency telephone switchboard 230. Thereby, call back on any alternative subscription ID is enabled.

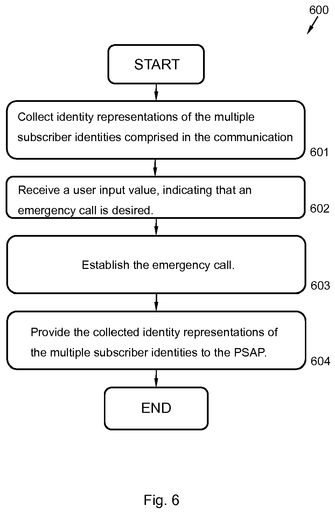

**Figure 6** is a flow chart illustrating embodiments of a method **600** for use in a communication device 210. The communication device 210 is configured for multiple subscriber identities, comprising at least a first subscriber identity and a second subscriber identity. Each of the multiple subscriber identities may be associated with a respective modem, utilise the same modem, or share parts of the same modem according to different implementations.

The first subscriber identity and/or the second subscriber identity may comprise any of a Subscriber Identification Module "SIM" card, a Universal Integrated Circuit Card "UICC", a Universal Subscriber Identity Module "USIM", an Internet protocol multimedia Services Identity Module "ISIM", a Removable User Identity Module "R-UIM", a CDMA Subscriber Identity Module "CSIM", a Willcom-SIM "W-SIM" and/or a Voice over the Internet Protocol "VoIP" subscription, according to different embodiments.

The method 600 aims at for making an emergency call with the communication device 210 over a wireless communication system 200), via a network node 220-1, 220-2, 220-3, to a PSAP 230 by dialling a national/regional emergency number.

The wireless communication system 200 may comprise a cellular network based on any radio access technology of: Global System for Mobile Communications, GSM, Enhanced Data Rates for GSM Evolution, EDGE, Universal Mobile Telecommunications System, UMTS, Code Division Access, CDMA, CDMA 2000, Time Division Synchronous CDMA, TD-SCDMA, Long Term Evolution, LTE within the Third Generation Partnership Project, 3GPP, or possibly a similar radio access technology, in different embodiments. Further, the wireless communication system 200 may comprise a Wi-Fi network, as defined by any of IEEE standards 802.11 a, b, g and/or n and/or the Internet Protocol, IP.

The communication device 210 may be configured for radio communication with the cellular network, and/or for accessing the wireless local area network.

To appropriately make the emergency call over the wireless communication system 200, the method 600 may comprise a number of actions 601-604.

It is however to be noted that any, some or all of the described actions 601-604, may be performed in a somewhat different chronological order than the enumeration indicates, or even be performed simultaneously. In particular actions 601 and 602 may be performed in any order. However, by performing action 601 before action 602, latency before initiating emergency call setup procedure may be minimized, or at least somewhat reduced. The method 600 may comprise the following actions:

### Action 601

Identity representations of the multiple subscriber identities comprised in the communication device 210 are collected.

These identity representations of the multiple subscriber identities comprised in the communication device 210 may comprise any of: the user's directory number, User Equipment Identity, UEID, which may be allocated by the network node 220 at the time of registration, Mobile Subscriber Integrated Services Digital Network Number, MSISDN, dialable phone number, Session Initiation Protocol Uniform Resource Identifier, SIP URI, or a similar distinct identification number and/or denomination.

### Action 602

A user input value is received, indicating that an emergency call is desired by the user.

The user input value may be received over a user interface. Such user interface may comprise a keyboard, keypad or similar device configured for receiving user input values, according to some embodiments.

The input value indicating that an emergency call is desired may comprise any national, regional or international emergency number such as e.g. 112, 911, 119, 999 etc. which number may be different in different countries/regions.

### Action 603

The emergency call is established.

The emergency call may be established on any subscriber identity such as for example the primary subscriber identity/SIM.

### Action 604

The collected 602 identity representations of the multiple subscriber identities are provided to the PSAP 230.

In some embodiments, the collected 601 identity representations of the multiple subscriber identities 740-1, 740-2 may be provided to the PSAP 230 in a call request message when establishing 603 the emergency call.

Alternatively, the collected 601 identity representations of the multiple subscriber identities may be provided to the PSAP 230 by means of call-related supplementary services, according to some embodiments. According to those embodiments, the information may be provided after transmission of an emergency call request message and sent via the network node 220-1, 220-2, 220-3. The network node 220-1, 220-2, 220-3 may comprise an MSC, in some embodiments. According to some embodiments, the identity representations of the multiple subscriber identities may comprise e.g. UEIDs or MSISDNs of some or all active subscriptions using Call-Related Supplementary Services. The presently defined Call-Related Supplementary Services signalling procedures may not support this signalling; in which case changes to the protocols defined in the relevant standards documents is needed.

However, the collected 601 identity representations of the multiple subscriber identities may be provided, according to some embodiments, to the PSAP 230 by means of Dual-Tone Multi-Frequency, DTMF, signalling. According to at least some of those embodiments, the information may be provided after the setup of the emergency call and sent via the network node 220-1, 220-2, 220-3. The network node 220-1, 220-2, 220-3 may comprise an MSC, in some embodiments.

The emergency call setup procedure may comprise a number of messages being sent between the communication device 210 and the network node 220-1, 220-2, 220-3. One of the firstly sent messages may be the call setup request message. It may not be enough to have sent the request message, also the other messages in the procedure may be exchanged before the DTMF signalling can begin, according to some embodiments.

DTMF signal messages may be used to transfer information between the communication device 210 and its associated network node 220-1, 220-2, 220-3, which may comprise a MSC. In normal uplink DTMF operation between end-to-end voice call users, the MSC may convert the DTMF signal messages it receives from the communication device 210 to in-band frequency tones. Each DTMF signal may convey 1 out of 16 symbols (0-9,A,B,C,D,*,#). In case of an emergency call, the DTMF signal messages may be used by the communication device 210 to signal identity representations, such as e.g. MSISDNs of some or all active subscriptions of the communication device 210. In a first DTMF-based solution, the network node 220-1, 220-2, 220-3, such as e.g. the MSC, may convert the received signals to in-band tones according to presently specified and existing MSC functionality. The PSAP may then be prepared to receive DTMF tones, and decode them back to digits. These digits may finally be interpreted as identity representations, such as e.g. MSISDN numbers which may be used by the PSAP 230 to attempt call back to the emergency calling communication device 210.

Further, in some embodiments, the collected 601 identity representations of the multiple subscriber identities may be provided to the PSAP 230 by means of a Dual-Tone Multi-Frequency, DTMF, message. According to some of those embodiments, the information may be provided after transmission of an emergency call request message and sent via the network node 220-1, 220-2, 220-3. The network node 220-1, 220-2, 220-3 may comprise an MSC, in some embodiments. Thus DTMF signal messages may be signalled between the communication device 210 and the network node 220-1, 220-2, 220-3 which may comprise an MSC.

The DTMF signal messages may be used by the communication device 210 to signal identity representations, such as e.g. the UEIDs or MSISDNs of some or all active subscriptions of the communication device 210. However, instead of converting the DTMF signals to in-band tones, the network node 220-1, 220-2, 220-3 such as the MSC may decode the DTMF messages into call-back numbers and convey these to the PSAP 230 using an appropriate protocol for such information.

Further, in some embodiments, the provision of the collected 601 identity representations of the multiple subscriber identities to the PSAP 230 when establishing 603 the emergency call may further comprise encrypting the message carrying the multiple subscriber identities. This may be made in particular in some embodiments wherein identification related information is provided after transmission of emergency call request message. Thereby, interception by unwanted parties may be prevented.

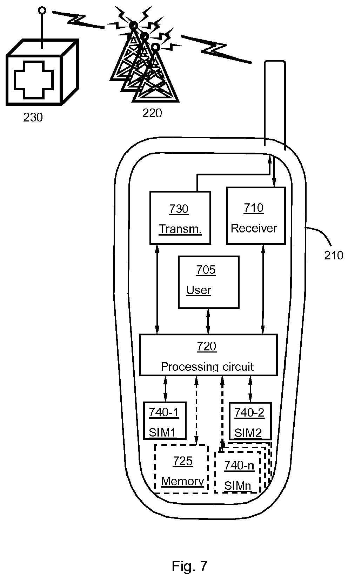

**Figure 7** is a block diagram illustrating a communication device 210 configured for multiple subscriber identities **740-1, 740-2, 740-n,** comprising at least a first subscriber identity 740-1 and a second subscriber identity 740-2. Thus the communication device 210 may comprise two, three, four, ..., n subscriber identities according to different embodiments, where n is an arbitrary positive integer. The communication device 210 aims at performing the method 600 for making an emergency call to a Public Service Answering Point "PSAP" 230, via a network node 220-1, 220-2, 220-3 according to any, some or all of actions 601-604.

The first subscriber identity and/or the second subscriber identity may comprise any of a Subscriber Identification Module "SIM" card, a Universal Integrated Circuit Card "UICC", a Universal Subscriber Identity Module "USIM", an Internet protocol multimedia Services Identity Module "ISIM", a Removable User Identity Module "R-UIM", a CDMA Subscriber Identity Module "CSIM", a Willcom-SIM "W-SIM" and/or a Voice over the Internet Protocol "VoIP" subscription, according to different embodiments.

The wireless communication system 200 may comprise a cellular network based on any radio access technology of: GSM, EEDGE, UMTS, CDMA, CDMA 2000, TD-SCDMA, LTE within the 3GPP, or possibly a similar radio access technology, in different embodiments. Further, the wireless communication system 200 may comprise a Wi-Fi network, as defined by any of IEEE standards 802.11 a, b, g and/or n and/or the Internet Protocol.

The communication device 210 may be configured for radio communication with the cellular network, and/or for accessing the wireless local area network.

To appropriately perform the different embodiments of the above described method 600 according to any, some or all of the above described actions 601-604 for making the emergency call, the communication device 210 comprises a number of units. However, for enhanced clarity, any internal electronics or other components of the communication device 210, not completely indispensable for understanding the herein described embodiments has been omitted from Figure 7.

The communication device 210 comprises a user interface **705,** configured for receiving a user input value, indicating that an emergency call is desired.

The user interface 705 may comprise a key board, a key pad or similar.

The communication device 210 further comprises a processing circuit **720**. The processing circuit 720 is configured for collecting identity representations of the multiple subscriber identities 740-1, 740-2, 740-n comprised in the communication device 210.

The identity representations of the multiple subscriber identities 740-1, 740-2, 740-n comprised in the communication device 210 may comprise, for example, any of: the user's directory number, User Equipment Identity, UEID, Mobile Subscriber Integrated Services Digital Network Number, MSISDN, dialable phone number, Session Initiation Protocol Uniform Resource Identifier, SIP URI, or any similar appropriate number of denomination for identification.

The processing circuit 720 may comprise e.g. one or more instances of a Central Processing Unit, CPU, a processing unit, a processing circuit, a processor, an Application Specific Integrated Circuit, ASIC, a microprocessor, or other processing logic that may interpret and execute instructions. The herein utilised expression "processing circuit" may thus represent a processing circuitry comprising a plurality of processing circuits, such as e.g. any, some or all of the ones enumerated above.

The processing circuit 720 may further perform data processing functions for inputting, outputting, and processing of data comprising data buffering and device control functions, such as call processing control, user interface control, or the like.

In addition, the communication device 210 further comprises a transmitter **730**, configured for establishing the emergency call. Also, the communication device 210 is further configured for providing the collected identity representations of the multiple subscriber identities 740-1, 740-2, 740-n to the PSAP 230.

In some embodiments the transmitter 730 may be further configured for providing the collected identity representations of the multiple subscriber identities 740-1, 740-2, 740-n to the PSAP 230 in a call request message when establishing the emergency call.

Furthermore, in some embodiments, the transmitter 730 may be further configured for providing the collected identity representations of the multiple subscriber identities 740-1, 740-2, 740-n to the PSAP 230 by means of call-related supplementary services.

Alternatively, the transmitter 730 may be further configured for providing the collected identity representations of the multiple subscriber identities 740-1, 740-2, 740-n to the PSAP 230 by means of Dual-Tone Multi-Frequency, DTMF, signalling in some embodiments.

A receiving network node 220-1, 220-2, 220-3, which may comprise an MSC, may then either convert the signals to in-band frequency tones, or convey the information according to some other protocol to the PSAP 230, according to different embodiments.

Furthermore, the transmitter 730 may be further configured for encrypting the message carrying the multiple subscriber identities 740-1, 740-2, 740-n before providing the collected identity representations of the multiple subscriber identities 740-1, 740-2, 740-n to the PSAP 230.

Some optional embodiments of the communication device 210 may comprise a memory **725**.

The memory 725 may comprise a physical device utilised to store data or programs i.e. sequences of instructions, on a temporary or permanent basis. According to some embodiments, the memory 725 may comprise integrated circuits comprising silicon-based transistors. Further, the memory 725 may be volatile or non-volatile.

The actions 601-604 to be performed in the communication device 210 configured for multiple subscriber identities 740-1, 740-2, 740-n comprising at least a first subscriber identity 740-1 and a second subscriber identity 740-2, may be implemented through the one or more processing circuits 720 in the communication device 210, together with computer program code for performing the functions of the actions 601-604. Thus a computer program product, comprising instructions for performing the actions 601-604 in the communication device 210 may be configured for making an emergency call to a Public Service Answering Point, PSAP, according to the described method 600 according to the actions 601-604, when the computer program is loaded in a processing circuit 720 of the communication device 210.

The computer program product mentioned above may be provided for instance in the form of a data carrier carrying computer program code for performing at least some of the actions 601-604 according to some embodiments when being loaded into the processing circuit 720. The data carrier may be e.g. a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to the communication device 210 remotely, e.g. over an Internet or an intranet connection.

The terminology used in the detailed description of the invention as illustrated in the accompanying drawings is not intended to be limiting of the described method 600 and communication device 210, which instead are limited by the enclosed claims.

As used herein, the term "and/or" comprises any and all combinations of one or more of the associated listed items. In addition, the singular forms "a", "an" and "the" are to be interpreted as "at least one", thus also comprising a plurality, unless expressly stated otherwise. It will be further understood that the terms "includes", "comprises", "including" and/or "comprising", specifies the presence of stated features, actions, integers, steps, operations, elements, and/or components, but do not preclude the presence or addition of one or more other features, actions, integers, steps, operations, elements, components, and/or groups thereof.

## Claims

1. A method (500) in a communication device (210) configured for multiple subscriber identities (740-1, 740-2, 740-n), comprising at least a first subscriber identity (740-1) and a second subscriber identity (740-2), for making an emergency call to a Public Service Answering Point "PSAP" (230), via a network node (220-1, 220-2, 220-3), which method (500) comprises:
collecting (601) identity representations of the multiple subscriber identities (740-1, 740-2, 740-n) comprised in the communication device (210), wherein the identity representations comprise any of: user's directory number, User Equipment Identity, Mobile Subscriber Integrated Services Digital Network Number, dialable phone number, Session Initiation Protocol Uniform Resource Identifier, or a similar distinct identification number and/or denomination;
receiving (602) a user input value, indicating that an emergency call is desired;
establishing (603) the emergency call; and
providing (604) the collected (601) identity representations of the multiple subscriber identities (740-1, 740-2, 740-n) to the PSAP (230) for enabling call back on any of the multiple subscriber identities (740-1, 740-2, 740-n).

2. The method (600) according to claim 1, wherein the collected (601) identity representations of the multiple subscriber identities (740-1, 740-2, 740-n) are provided (604) to the PSAP (230) in a call request message when establishing (603) the emergency call.

3. The method (600) according to claim 1, wherein the collected (601) identity representations of the multiple subscriber identities (740-1, 740-2, 740-n) are provided (604) to the PSAP (230) by means of call-related supplementary services.

4. The method (600) according to claim 1, wherein the collected (601) identity representations of the multiple subscriber identities (740-1, 740-2, 740-n) are provided (604) to the PSAP (230) by means of Dual-Tone Multi-Frequency signalling.

5. The method (600) according to claim 1, wherein the identity representations of the multiple subscriber identities (740-1, 740-2, 740-n) comprised in the communication device (210) comprises any of: the user's directory number, User Equipment Identity "UEID", Mobile Subscriber Integrated Services Digital Network Number "MSISDN", dialable phone number, Session Initiation Protocol Uniform Resource Identifier "SIP URI".

6. The method (600) according to any of claims 3-5, wherein the action of providing (604) the collected (601) identity representations of the multiple subscriber identities (740-1, 740-2, 740-n) to the PSAP (230) further comprises encrypting the message carrying the multiple subscriber identities (740-1, 740-2, 740-n).

7. The method (600) according to claim 1, wherein the first subscriber identity (740-1) and the second subscriber identity (740-2) comprises any of a Subscriber Identification Module "SIM" card, a Universal Integrated Circuit Card "UICC", a Universal Subscriber Identity Module "USIM", an Internet protocol multimedia Services Identity Module "ISIM", a Removable User Identity Module "R-UIM", a CDMA Subscriber Identity Module "CSIM", a Willcom-SIM "W-SIM" and/or a Voice over the Internet Protocol "VoIP" subscription.

8. The method (600) according to claim 1, wherein the communication device (210) comprising at least one first subscriber identity (740-1) and one second subscriber identity (740-2) is configured for communication on any technology of: Global System for Mobile Communications "GSM", Enhanced Data Rates for GSM Evolution "EDGE", Universal Mobile Telecommunications System "UMTS", Code Division Access "CDMA", "CDMA 2000", Time Division Synchronous CDMA "TD-SCDMA", Long Term Evolution "LTE"; Wireless Fidelity "Wi-Fi", as defined by any of Institute of Electrical and Electronics Engineers "IEEE" standards 802.11 a, b, g and/or n and/or the Internet Protocol "IP".

9. A communication device (210) configured for multiple subscriber identities (740-1, 740-2, 740-n), comprising at least a first subscriber identity (740-1) and a second subscriber identity (740-2), for making an emergency call to a Public Service Answering Point "PSAP" (230), via a network node (220-1, 220-2, 220-3), which communication device (210) comprises:
a user interface (705), configured for receiving a user input value, indicating that an emergency call is desired;
a processing circuit (720) configured for collecting identity representations of the multiple subscriber identities (740-1, 740-2, 740-n) comprised in the communication device (210), wherein the identity representations comprise any of: user's directory number, User Equipment Identity, Mobile Subscriber Integrated Services Digital Network Number, dialable phone number, Session Initiation Protocol Uniform Resource Identifier, or a similar distinct identification number and/or denomination; and
a transmitter (730), configured for establishing the emergency call and also configured for providing the collected identity representations of the multiple subscriber identities (740-1, 740-2, 740-n) to the PSAP (230) for enabling call back on any of the multiple subscriber identities (740-1, 740-2, 740-n).

10. The communication device (210) according to claim 9, wherein the transmitter (730) is configured for providing the collected identity representations of the multiple subscriber identities (740-1, 740-2, 740-n) to the PSAP (230) in a call request message when establishing the emergency call.

11. The communication device (210) according to claim 9, wherein the transmitter (730) is further configured for providing the collected identity representations of the multiple subscriber identities (740-1, 740-2, 740-n) to the PSAP (230) by means of call-related supplementary services.

12. The communication device (210) according to claim 9, wherein the transmitter (730) is further configured for providing the collected identity representations of the multiple subscriber identities (740-1, 740-2, 740-n) to the PSAP (230) by means of Dual-Tone Multi-Frequency signalling.

13. The communication device (210) according to claim 9, wherein the identity representations of the multiple subscriber identities (740-1, 740-2, 740-n) comprised in the communication device (210) comprises any of: the user's directory number, User Equipment Identity "UEID", Mobile Subscriber Integrated Services Digital Network Number "MSISDN", dialable phone number, Session Initiation Protocol Uniform Resource Identifier "SIP URI".

14. The communication device (210) according to any of the claims 11-13, wherein the transmitter (730) is further configured for encrypting the message carrying the multiple subscriber identities (740-1, 740-2, 740-n) before providing the collected identity representations of the multiple subscriber identities (740-1, 740-2, 740-n) to the PSAP (230).

15. The communication device (210) according to claim 9, wherein the first subscriber identity (740-1) and the second subscriber identity (740-2) comprises any of a Subscriber Identification Module "SIM" card, a Universal Integrated Circuit Card "UICC", a Universal Subscriber Identity Module "USIM", an Internet protocol multimedia Services Identity Module "ISIM", a Removable User Identity Module "R-UIM", a CDMA Subscriber Identity Module "CSIM", a Willcom-SIM "W-SIM" and/or a Voice over the Internet Protocol "VoIP" subscription.

16. The communication device (210) according to claim 9, configured for communication on any technology of: Global System for Mobile Communications "GSM", Enhanced Data Rates for GSM Evolution "EDGE", Universal Mobile Telecommunications System "UMTS", Code Division Access "CDMA", "CDMA 2000", Time Division Synchronous CDMA "TD-SCDMA", Long Term Evolution "LTE"; Wireless Fidelity "Wi-Fi", as defined by any of Institute of Electrical and Electronics Engineers "IEEE" standards 802.11 a, b, g and/or n and/or the Internet Protocol "IP".

17. Computer program product in a communication device (210) according to any of claims 9-16, configured for multiple subscriber identities (740-1, 740-2, 740-n) comprising at least a first subscriber identity (740-1) and a second subscriber identity (740-2), for performing the method (600) for making an emergency call to a Public Service Answering Point "PSAP" (230) according to any of the claims 1-9, when the computer program product is loaded in a processing circuit (720) of the communication device (210).

## Patentansprüche

1. Verfahren (500) in einem Kommunikationsgerät (210), das für mehrere Teilnehmeridentitäten (740-1, 740-2, 740-n) konfiguriert ist, umfassend mindestens eine erste Teilnehmeridentität (740-1) und eine zweite Teilnehmeridentität (740-2), um einen Notruf an eine Notrufzentrale (PSAP - Public Service Answering Point) (230) über einen Netzwerkknoten (220-1, 220-2, 220-3) abzusetzen, wobei das Verfahren (500) umfasst:
Erfassen (601) von Identitätsdarstellungen der mehreren Teilnehmeridentitäten (740-1, 740-2, 740-n), die in dem Kommunikationsgerät (210) enthalten sind, wobei die Identitätsdarstellungen beliebige der Folgenden umfassen: Telefonnummer des Benutzers, Benutzergerätidentität, "Mobile Subscriber Integrated Services Digital Network Number" (MSISDN), anwählbare Telefonnummer, "Session Initiation Protocol Uniform Resource Identifier" (SIP-URI) oder eine ähnliche unterscheidbare Identifikationsnummer und/oder Bezeichnung;
Empfangen (602) eines Benutzereingabewerts, der angibt, dass ein Notruf gewünscht wird;
Aufbauen (603) des Notrufs und
Bereitstellen (604) der erfassten (601) Identitätsdarstellungen der mehreren Teilnehmeridentitäten (740-1, 740-2, 740-n) an die PSAP (230), um Rückruf an beliebige der mehreren Teilnehmeridentitäten (740-1, 740-2, 740-n) zu ermöglichen.

2. Verfahren (600) nach Anspruch 1, wobei der PSAP (230) die erfassten (601) Identitätsdarstellungen der mehreren Teilnehmeridentitäten (740-1, 740-2, 740-n) in einer Anrufanforderungsnachricht beim Aufbau (603) des Notrufs bereitgestellt (604) werden.

3. Verfahren (600) nach Anspruch 1, wobei der PSAP (230) die erfassten (601) Identitätsdarstellungen der mehreren Teilnehmeridentitäten (740-1, 740-2, 740-n) mittels anrufbezogener Zusatzdienste bereitgestellt (604) werden.

4. Verfahren (600) nach Anspruch 1, wobei der PSAP (230) die erfassten (601) Identitätsdarstellungen der mehreren Teilnehmeridentitäten (740-1, 740-2, 740-n) mittels Doppelton-Mehrfrequenz(DTMF)-Signalisierung bereitgestellt (604) werden.

5. Verfahren (600) nach Anspruch 1, wobei die Identitätsdarstellungen der mehreren Teilnehmeridentitäten (740-1, 740-2, 740-n), die in dem Kommunikationsgerät (210) enthalten sind, beliebige der Folgenden umfassen: Telefonnummer des Benutzers, Benutzergerätidentität (UEID - User Equipment Identity), "Mobile Subscriber Integrated Services Digital Network Number" (MSISDN), anwählbare Telefonnummer, "Session Initiation Protocol Uniform Resource Identifier" (SIP-URI).

6. Verfahren (600) nach einem der Ansprüche 3 bis 5, wobei das Bereitstellen (604) der erfassten (601) Identitätsdarstellungen der mehreren Teilnehmeridentitäten (740-1, 740-2, 740-n) an die PSAP (230) ferner Verschlüsseln der Nachricht, die die mehreren Teilnehmeridentitäten (740-1, 740-2, 740-n) trägt, umfasst.

7. Verfahren (600) nach Anspruch 1, wobei die erste Teilnehmeridentität (740-1) und die zweite Teilnehmeridentität (740-2) ein beliebiges von einer "Subscriber Identification Module"(SIM)-Karte, einer "Universal Integrated Circuit Card" (UICC), einem "Universal Subscriber Identity Module" (USIM), einem "Internet protocol multimedia Services Identity Module" (ISIM), einem "Removable User Identity Module" (R-UIM), einem "CDMA Subscriber Identity Module" (CSIM), einem "Willcom-SIM" (W-SIM) und/oder einem "Voice over the Internet Protocol"(VoIP)-Abonnement umfassen.

8. Verfahren (600) nach Anspruch 1, wobei das Kommunikationsgerät (210), das mindestens eine erste Teilnehmeridentität (740-1) und eine zweite Teilnehmeridentität (740-2) umfasst, zur Kommunikation mit einer beliebigen der folgenden Technologien konfiguriert ist: "Global System for Mobile Communications" (GSM), "Enhanced Data Rates for GSM Evolution" (EDGE), "Universal Mobile Telecommunications System" (UMTS), "Code Division Access" (CDMA), "CDMA 2000", Zeitmultiplex-synchronem CDMA (TD-SCDMA), "Long Term Evolution" (LTE), "Wireless Fidelity" (Wi-Fi), definiert gemäß einem beliebigen der Standards 802.11 a, b, g und/oder n des "Institute of Electrical and Electronics Engineers" (IEEE) und/oder dem "Internet Protocol" (IP).

9. Kommunikationsgerät (210), das für mehrere Teilnehmeridentitäten (740-1, 740-2, 740-n) konfiguriert ist, umfassend mindestens eine erste Teilnehmeridentität (740-1) und eine zweite Teilnehmeridentität (740-2), um einen Notruf an eine Notrufzentrale (PSAP) (230) über einen Netzwerkknoten (220-1, 220-2, 220-3) abzusetzen, wobei das Kommunikationsgerät (210) umfasst:
eine Benutzeroberfläche (705), die zum Empfangen eines Benutzereingabewerts konfiguriert ist, der angibt, dass ein Notruf gewünscht wird;
eine Verarbeitungsschaltung (720), die zum Erfassen von Identitätsdarstellungen der mehreren Teilnehmeridentitäten (740-1, 740-2, 740-n) konfiguriert ist, die in dem Kommunikationsgerät (210) enthalten sind, wobei die Identitätsdarstellungen beliebige der Folgenden umfassen: Telefonnummer des Benutzers, Benutzergerätidentität, "Mobile Subscriber Integrated Services Digital Network Number", anwählbare Telefonnummer, "Session Initiation Protocol Uniform Resource Identifier" oder eine ähnliche unterscheidbare Identifikationsnummer und/oder Bezeichnung; und
einen Sender (730), der zum Aufbauen des Notrufs konfiguriert ist und auch zum Bereitstellen der erfassten Identitätsdarstellungen der mehreren Teilnehmeridentitäten (740-1, 740-2, 740-n) an die PSAP (230) konfiguriert ist, um Rückruf an beliebige der mehreren Teilnehmeridentitäten (740-1, 740-2, 740-n) zu ermöglichen.

10. Kommunikationsgerät (210) nach Anspruch 9, wobei der Sender (730) konfiguriert ist, der PSAP (230) die erfassten Identitätsdarstellungen der mehreren Teilnehmeridentitäten (740-1, 740-2, 740-n) in einer Anrufanforderungsnachricht beim Aufbau des Notrufs bereitzustellen.

11. Kommunikationsgerät (210) nach Anspruch 9, wobei der Sender (730) ferner konfiguriert ist, der PSAP (230) die erfassten Identitätsdarstellungen der mehreren Teilnehmeridentitäten (740-1, 740-2, 740-n) mittels anrufbezogener Zusatzdienste bereitzustellen.

12. Kommunikationsgerät (210) nach Anspruch 9, wobei der Sender (730) ferner konfiguriert ist, der PSAP (230) die erfassten Identitätsdarstellungen der mehreren Teilnehmeridentitäten (740-1, 740-2, 740-n) mittels Doppelton-Mehrfrequenz-Signalisierung bereitzustellen.

13. Kommunikationsgerät (210) nach Anspruch 9, wobei die Identitätsdarstellungen der mehreren Teilnehmeridentitäten (740-1, 740-2, 740-n), die in dem Kommunikationsgerät (210) enthalten sind, beliebige der Folgenden umfassen: Telefonnummer des Benutzers, Benutzergerätidentität (UEID), "Mobile Subscriber Integrated Services Digital Network Number" (MSISDN), anwählbare Telefonnummer, "Session Initiation Protocol Uniform Resource Identifier" (SIP-URI).

14. Kommunikationsgerät (210) nach einem der Ansprüche 11 - 13, wobei der Sender (730) ferner konfiguriert ist, um die Nachricht, die die mehreren Teilnehmeridentitäten (740-1, 740-2, 740-n) trägt, zu verschlüsseln, bevor der PSAP (230) die erfassten Identitätsdarstellungen der mehreren Teilnehmeridentitäten (740-1, 740-2, 740-n) bereitgestellt werden.

15. Kommunikationsgerät (210) nach Anspruch 9, wobei die erste Teilnehmeridentität (740-1) und die zweite Teilnehmeridentität (740-2) ein beliebiges von einer "Subscriber Identification Module"(SIM)-Karte, einer "Universal Integrated Circuit Card" (UICC), einem "Universal Subscriber Identity Module" (USIM), einem "Internet protocol multimedia Services Identity Module" (ISIM), einem "Removable User Identity Module" (R-UIM), einem "CDMA Subscriber Identity Module" (CSIM), einem "Willcom-SIM" (W-SIM) und/oder einem "Voice over the Internet Protocol"(VoIP)-Abonnement umfassen.

16. Kommunikationsgerät (210) nach Anspruch 9, das zur Kommunikation mit einer beliebigen der folgenden Technologien konfiguriert ist: "Global System for Mobile Communications" (GSM), "Enhanced Data Rates for GSM Evolution" (EDGE), "Universal Mobile Telecommunications System" (UMTS), "Code Division Access" (CDMA), "CDMA 2000", Zeitmultiplex-synchronem CDMA (TD-SCDMA), "Long Term Evolution" (LTE); "Wireless Fidelity" (Wi-Fi), definiert gemäß einem beliebigen der Standards 802.11 a, b, g und/oder n des "Institute of Electrical and Electronics Engineers" (IEEE) und/oder dem "Internet Protocol" (IP).

17. Computerprogrammprodukt in einem Kommunikationsgerät (210) nach einem der Ansprüche 9 - 16, das für mehrere Teilnehmeridentitäten (740-1, 740-2, 740-n) konfiguriert ist, umfassend mindestens eine erste Teilnehmeridentität (740-1) und eine zweite Teilnehmeridentität (740-2), zur Durchführung des Verfahrens (600) zum Absetzen eines Notrufs an eine Notrufzentrale (PSAP) (230) gemäß einem der Ansprüche 1 - 9, wenn das Computerprogrammprodukt in eine Verarbeitungsschaltung (720) des Kommunikationsgeräts (210) geladen wird.

## Revendications

1. Procédé (500) dans un dispositif de communication (210) configuré pour plusieurs identités d'abonné (740-1, 740-2, 740-n), comportant au moins une première identité d'abonné (740-1) et une deuxième identité d'abonné (740-2), permettant de faire un appel d'urgence à un centre public de traitement des appels « PSAP » (230), par l'intermédiaire d'un noeud de réseau (220-1, 220-2, 220-3), le procédé (500) comprenant les étapes suivantes :
collecter (601) des représentations d'identité des multiples identités d'abonné (740-1, 740-2, 740-n) comprises dans le dispositif de communication (210), les représentations d'identité comportant un élément quelconque parmi : un numéro d'annuaire d'utilisateur, une identité d'équipement utilisateur, un numéro de réseau numérique à intégration de services d'abonné mobile, un numéro de téléphone composable, un identifiant uniforme de ressources de protocole d'initiation de session, ou un numéro d'identification distinct similaire et/ou une dénomination ;
recevoir (602) une valeur d'entrée utilisateur, indiquant qu'un appel d'urgence est désiré ;
établir (603) l'appel d'urgence ; et
fournir (604) les représentations d'identité collectées (601) des multiples identités d'abonné (740-1, 740-2, 740-n) au PSAP (230) pour permettre un rappel de l'une quelconque des multiples identités d'abonné (740-1, 740-2, 740-n).

2. Procédé (600) selon la revendication 1, dans lequel les représentations d'identité collectées (601) des multiples identités d'abonné (740-1, 740-2, 740-n) sont fournies (604) au PSAP (230) dans un message de requête d'appel lors de l'établissement (603) de l'appel d'urgence.

3. Procédé (600) selon la revendication 1, dans lequel les représentations d'identité collectées (601) des multiples identités d'abonné (740-1, 740-2, 740-n) sont fournies (604) au PSAP (230) au moyen de services supplémentaires associés à un appel.

4. Procédé (600) selon la revendication 1, dans lequel les représentations d'identité collectées (601) des multiples identités d'abonné (740-1, 740-2, 740-n) sont fournies (604) au PSAP (230) au moyen d'une signalisation multifréquence double tonalité.

5. Procédé (600) selon la revendication 1, dans lequel les représentations d'identité des multiples identités d'abonné (740-1, 740-2, 740-n) comprises dans le dispositif de communication (210) comprennent un élément quelconque parmi : un numéro d'annuaire de l'utilisateur, une identité d'équipement utilisateur « UEID », un numéro de réseau numérique à intégration de services d'abonné mobile « MSISDN », un numéro de téléphone composable, un identifiant uniforme de ressources de protocole d'initiation de session « SIP URI ».

6. Procédé (600) selon l'une quelconque des revendications 3-5, dans lequel l'action consistant à fournir (604) les représentations d'identité collectées (601) des multiples identités d'abonné (740-1, 740-2, 740-n) au PSAP (230) comprend en outre crypter le message contenant les multiples identités d'abonné (740-1, 740-2, 740-n).

7. Procédé (600) selon la revendication 1, dans lequel la première identité d'abonné (740-1) et la deuxième identité d'abonné (740-2) comprennent un élément quelconque parmi une carte de module d'identification d'abonné « SIM », une carte de circuit intégré universel « UICC », un module d'identité d'abonné universel « USIM », un module d'identité de services multimédia IP « ISIM », un module d'identité utilisateur amovible « R-UIM », un module d'identité d'abonné CDMA « CSIM », un Willcom-SIM « W-SIM » et/ou un abonnement voix sur IP « VoIP ».

8. Procédé (600) selon la revendication 1, dans lequel le dispositif de communication (210) comprenant au moins une première identité d'abonné (740-1) et une deuxième identité d'abonné (740-2) est configuré pour une communication sur une technologie quelconque parmi : système mondial de communication avec les mobiles « GSM », taux de données améliorés pour l'évolution GSM « EDGE », système de télécommunication mobile universel « UMTS », accès par répartition en code «CDMA », « CDMA 2000 », CDMA synchrone par répartition dans le temps « TD-SCDMA », évolution à long terme « LTE », fidélité sans fil « Wi-Fi », comme défini par une quelconque des normes de l'institut « IEEE » (Institute of Electrical and Electronics Engineers) 802.11 a, b, g et/ou n et/ou le protocole Internet « IP ».

9. Dispositif de communication (210) configuré pour plusieurs identités d'abonné (740-1, 740-2, 740-n), comprenant au moins une première identité d'abonné (740-1) et une deuxième identité d'abonné (740-2), permettant de faire un appel d'urgence à un centre public de traitement des appels « PSAP » (230), par l'intermédiaire d'un noeud de réseau (220-1, 220-2, 220-3), le dispositif de communication (210) comprenant :
une interface utilisateur (705), configurée pour recevoir une valeur d'entrée utilisateur, indiquant qu'un appel d'urgence est désiré ;
un circuit de traitement (720) configuré pour collecter des représentations d'identité des multiples identités d'abonné (740-1, 740-2, 740-n) comprises dans le dispositif de communication (210), les représentations d'identité comportant un élément quelconque parmi : un numéro d'annuaire d'utilisateur, une identité d'équipement utilisateur, un numéro de réseau numérique à intégration de services d'abonné mobile, un numéro de téléphone composable, un identifiant uniforme de ressources de protocole d'initiation de session, ou un numéro d'identification distinct similaire et/ou une dénomination ; et
un émetteur (730), configuré pour établir l'appel d'urgence et configuré également pour fournir les représentations d'identité collectées des multiples identités d'abonné (740-1, 740-2, 740-n) au PSAP (230) pour permettre un rappel de l'une quelconque des multiples identités d'abonné (740-1, 740-2, 740-n).

10. Dispositif de communication (210) selon la revendication 9, dans lequel l'émetteur (730) est configuré pour fournir les représentations d'identité collectées des multiples identités d'abonné (740-1, 740-2, 740-n) au PSAP (230) dans un message de requête d'appel lors de l'établissement de l'appel d'urgence.

11. Dispositif de communication (210) selon la revendication 9, dans lequel l'émetteur (730) est en outre configuré pour fournir les représentations d'identité collectées des multiples identités d'abonné (740-1, 740-2, 740-n) au PSAP (230) au moyen de services supplémentaires associés à un appel.

12. Dispositif de communication (210) selon la revendication 9, dans lequel l'émetteur (730) est en outre configuré pour fournir les représentations d'identité collectées des multiples identités d'abonné (740-1, 740-2, 740-n) au PSAP (230) au moyen d'une signalisation multifréquence double tonalité.

13. Dispositif de communication (210) selon la revendication 9, dans lequel les représentations d'identité des multiples identités d'abonné (740-1, 740-2, 740-n) comprises dans le dispositif de communication (210) comprennent un élément quelconque parmi : un numéro d'annuaire de l'utilisateur, une identité d'équipement utilisateur « UEID », un numéro de réseau numérique à intégration de services d'abonné mobile « MSISDN », un numéro de téléphone composable, un identifiant uniforme de ressources de protocole d'initiation de session « SIP URI ».

14. Dispositif de communication (210) selon l'une quelconque des revendications 11-13, dans lequel l'émetteur (730) est en outre configuré pour crypter le message contenant les multiples identités d'abonné (740-1, 740-2, 740-n) avant de fournir les représentations d'identité collectées des multiples identités d'abonné (740-1, 740-2, 740-n) au PSAP (230).

15. Dispositif de communication (210) selon la revendication 9, dans lequel la première identité d'abonné (740-1) et la deuxième identité d'abonné (740-2) comprennent un élément quelconque parmi une carte de module d'identification d'abonné « SIM », une carte de circuit intégré universel « UICC », un module d'identité d'abonné universel « USIM », un module d'identité de services multimédia IP « ISIM », un module d'identité utilisateur amovible « R-UIM », un module d'identité d'abonné CDMA « CSIM », un Willcom-SIM « W-SIM » et/ou un abonnement voix sur IP « VoIP ».

16. Dispositif de communication (210) selon la revendication 9, configuré pour une communication sur une technologie quelconque parmi : système mondial de communication avec les mobiles « GSM », taux de données améliorés pour l'évolution GSM « EDGE », système de télécommunication mobile universel « UMTS », accès par répartition en code « CDMA », « CDMA 2000 », CDMA synchrone par répartition dans le temps « TD-SCDMA », évolution à long terme « LTE », fidélité sans fil « Wi-Fi », comme défini par une quelconque des normes de l'institut « IEEE » (Institute of Electrical and Electronics Engineers) 802.11 a, b, g et/ou n et/ou le protocole Internet « IP ».

17. Produit programme d'ordinateur dans un dispositif de communication (210) selon l'une quelconque des revendications 9-16, configuré pour plusieurs identités d'abonné (740-1, 740-2, 740-n) comprenant au moins une première identité d'abonné (740-1) et une deuxième identité d'abonné (740-2), permettant d'exécuter le procédé (600) destiné à faire un appel d'urgence à un centre public de traitement des appels «PSAP» (230) selon l'une quelconque des revendications 1-9, lorsque le produit programme d'ordinateur est chargé dans un circuit de traitement (720) du dispositif de communication (210).
